# EUROPEAN PATENT APPLICATION

(11) **EP 1 380 619 A1**
(43) Date of publication of application: **14.01.2004**
(21) Application number: 02710484.3
(22) Date of filing: 04.02.2002
(51) Int. Cl.: C08L 81/00, C08J 5/22, C08G 75/00, C08J 7/00, C08J 7/02, H01M 8/02

(54) **PROTON-CONDUCTIVE POLYMER FILM AND PROCESS FOR PRODUCING THE SAME**

(30) Priority: 05.02.2001 JP 2001027973; 02.08.2001 JP 2001234606; 26.10.2001 JP 2001328596
(71) Applicant: KANEKA CORPORATION, Osaka-shi, Osaka 530-8288 (JP)
(72) Inventor: KUROMATSU, Hidekazu, Settsu-shi, Osaka 566-0072 (JP); NAMURA, Kiyoyuki, Nagaokakyo-shi, Kyoto 617-0837 (JP)
(74) Representative: West, Alan Harry
(86) International application number: PCT/JP2002/000875
(87) International publication number: WO 2002/062896

(57) **Abstract**

The present invention relates to a proton-conductive polymer membrane comprising a polymer compound which has structural repeating units represented by the following formula (1) in which the aromatic units are partially substituted with proton-conductive substituents, wherein the membrane has a solubility in methanol at room temperature of less than 0.01 % by weight or solubility in N-methyl-2-pyrrolidone at 5°C of less than 5 % by weight. In the formula, Ar₁ represents a divalent aromatic unit and x represents an integer of 0 to 2. Also, the present invention provides a simple process by which production costs are substantially decreased, for obtaining a proton-conductive polymer membrane having properties applicable in a polymer electrolyte fuel cell.

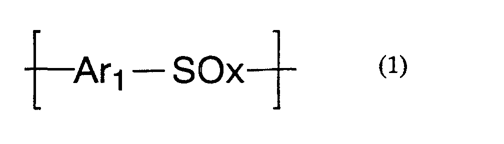

## Description

### TECHNICAL FIELD

The present invention relates to a proton-conductive polymer membrane and a process for preparing the same. Also, the present invention relates to a membrane for a fuel cell comprising the proton-conductive polymer membrane and a polymer electrolyte fuel cell.

### BACKGROUND ART

Polymer membrane comprising a polymer compound having a proton-conductive substituent such as a sulfonic acid group is used as the main structural material for electrochemical devices such as polymer electrolyte fuel cells, humidity sensors, gas sensors and electrochromic display devices.

Of these electrochemical devices, polymer electrolyte fuel cells are expected to be one of the pillars of new energy technology in the future.

A polymer electrolyte fuel cell (PEFC or PEMFC) using a polymer membrane comprising a polymer compound having a proton-conductive substituent has characteristics unavailable in other fuel cells (phosphoric acid types, solid oxide types, molten carbonate types) such as ability to operate in low temperatures and being small and lightweight. Consequently, applications in movable bodies such as automobiles and in consumer portable devices are being considered. Particularly, social interest is increasing in a fuel cell powered automobile loaded with polymer electrolyte fuel cell as the ultimate ecology car.

As a polymer membrane comprising a polymer compound having a proton-conductive substituent, a styrene-type cation exchange membrane developed in the 1950s is known. However, this membrane has poor stability in the environment in which a fuel cell operates and a practical fuel cell having sufficient life span has not yet been produced using this polymer membrane. As a polymer membrane comprising a polymer compound having a proton-conductive substituent which is practical and stable, perfluorocarbon sulfonic acid membrane such as Nafion (registered trademark of Dupont Co., hereinafter the same) has been developed and applications in many electrochemical devices such as a polymer electrolyte fuel cell have been suggested.

However, the perfluorocarbon sulfonic acid membrane is extremely expensive and the costs have been an obstacle to polymer electrolyte fuel cells becoming widespread. Therefore, reducing the costs of a polymer membrane comprising a polymer compound having a proton-conductive substituent which is the main component of a polymer electrolyte fuel cell is extremely important for polymer electrolyte fuel cells to become widespread.

Regarding the perfluorocarbon sulfonic acid membrane, thinning of the membrane is under consideration from the viewpoints of improving performance (decreasing membrane resistance) and reducing costs (reducing materials).

However, when this type of membrane is made thin, problems have been pointed out (JP-A-2000-260443) such as a decrease in handling properties and a tendency for the membrane to break due to the mechanical load when preparing the membrane electrode assembly and operating the fuel cell, due to insufficient mechanical strength. Furthermore, as many fluorine atoms are contained in the main chain, the water retention properties of the membrane are poor and as a result, technical problems have been pointed out (JP-A-11-250922) such as difficulty in moisture adjustment and being unsuitable for operation in high temperatures.

Consequently, in order to obtain a more inexpensive polymer membrane comprising a polymer compound having a proton-conductive substituent, various non-perfluorocarbon sulfonic acid type proton-conductive membranes comprising a hydrocarbon polymer compound have been suggested. Examples are sulfonated heat resistant aromatic polymer compounds such as sulfonated polyether ether ketone (JP-A-6-93114), sulfonated polyether sulfone (JP-A-10-45913), sulfonated polysulfone (JP-A-9-245818) and sulfonated polyimide (JP-A-2000-510511). Another example is a polymer membrane comprising a polymer compound having a proton-conductive substituent of sulfonated SEBS (abbreviation for styrene-(ethylene-butylene)-styrene, hereinafter the same) which is known to be inexpensive and mechanically and chemically stable (JP-A-10-503788). These proton-conductive membranes comprising a hydrocarbon polymer compound are considered to be easy to prepare and low in cost.

For example, proton conductivity of at least 1.0 × 10⁻² S/cm is desired in polymer membrane comprising a polymer compound having a proton-conductive substituent for a polymer electrolyte fuel cell loaded on an automobile. However, in the case of a proton-conductive membrane comprising a hydrocarbon polymer compound, the proton conductivity is usually below this range. When the amount of the proton-conductive substituent such as a sulfonic acid group which is introduced is increased in order to improve this, handling properties tend to decrease significantly, as mechanical strength decreases due to the membrane becoming water-soluble and swelling significantly from a rise in water absorption. Also, in many cases, chemical and thermal stability required for using in a polymer electrolyte fuel cell is insufficient and practical use has not yet been achieved.

As the sulfonated hydrocarbon polymer compound having chemical and thermal stability, a proton-conductive substance based on polyphenylene sulfide has been suggested.

However, polyphenylene sulfide is substantially solvent insoluble and compared to other solvent soluble polymer compounds used as the base material for a polymer membrane comprising a polymer compound having a proton-conductive substituent, processability such as membrane forming properties is poor.

For example, US Patent No. 4110265 discloses a method of preparing sulfonated polyphenylene sulfide by reacting polyphenylene sulfide with fuming sulfuric acid and using as a cation exchange substance. However, this cation exchange substance is a crosslinked polymer which is solvent insoluble and processing the cation exchange substance into a membrane which can be used in a polymer electrolyte fuel cell is difficult. More specifically, the method of contacting polyphenylene sulfide resin with fuming sulfuric acid and rinsing the remnant sulfuric acid with ion exchanged water to obtain sulfonated polyphenylene sulfide having an ion exchange capacity of 2.0 miliequivalent/ g is disclosed. In the case of processing into a membrane, the sulfonated polyphenylene sulfide is made into powder by pulverizing with a ball mill and this sulfonated polyphenylene sulfide powder is added into an acetone solution containing polyvinylidene fluoride to obtain a paste. Then, this paste is cast on a glass plate and after the solvent is removed, formed into a film having polyvinylidene fluoride as the supporting member. That is, substantially, sulfonated polyphenylene sulfide powder is considered to be present dispersed within the polyvinylidene fluoride. Therefore, there is the disadvantage that the characteristics of the sulfonated polyphenylene sulfide such as proton conductivity are inhibited by the polyvinylidene fluoride and do not sufficiently appear.

Also, JP-A-11-510198 suggests a sulfonated polyphenylene sulfide which is soluble in a polar aprotic solvent. This sulfonated polyphenylene sulfide is a polymer which can easily be processed into a film as solubility in a polar aprotic solvent is imparted by sulfonating polyphenylene sulfide and a process for preparing the polymer is disclosed. However, the method disclosed here comprises many steps such as sulfonating the polyphenylene sulfide, recovering the sulfonated substance by precipitation and drying, preparing the aprotic polar solvent solution of the sulfonated polyphenylene sulfide, preparing the membrane and removing the solvent.

In the method described in JP-A-11-510198, as mentioned above, many steps are required to obtain the sulfonated polyphenylene sulfide membrane which can be used in a polymer electrolyte fuel cell. As a result, production costs most likely will become high as the costs of the material which are ultimately reacted are high, equipment such as a reaction device are required for each step, production time is long and large costs for draining are required. Furthermore, because solvent solubility is imparted by introducing a sulfonic acid group, though the processability is improved, the membrane may dissolve in water, methanol, ethanol and dimethyl ether contained and used in the fuel of the fuel cell.

The sulfonated polyphenylene sulfide obtained by the method disclosed in Macromolecules 1996, volume 29, pages 6969-6971 and Macromolecules 1997, volume 30, pages 2941-2946 is reported to dissolve in water, methanol; N,N-dimethylformamide and dimethylsulfoxide depending on the amount of the sulfonic acid group. That is, in a polymer electrolyte fuel cell in which fuel and oxidants are moisturized and used and a direct methanol fuel cell in which methanol is directly used as fuel, the solvent solubility must be controlled by carefully adjusting the amount of the sulfonic acid group to be introduced or the membrane cannot be used as a membrane for a fuel cell. The membrane for a fuel cell is the main structural material of a polymer electrolyte fuel cell.

### DISCLOSURE OF INVENTION

The present invention relates to a proton-conductive polymer membrane comprising a polymer compound in which the aromatic units are partially substituted with proton-conductive substituents, wherein the polymer compound has a solvent solubility of at most a specific value. Also, the present invention provides a simple process, by which production costs are substantially reduced, for preparing a proton-conductive polymer membrane having properties applicable in a polymer electrolyte fuel cell.

The present invention also provides a proton-conductive polymer membrane which can be used as a membrane for a fuel cell and has high proton conductivity, which is essential in a membrane for a polymer electrolyte fuel cell, and stability so that the membrane components do not dissolve even in a polymer electrolyte fuel cell or direct methanol fuel cell, which uses various types of fuel.

Furthermore, the present invention provides a membrane for a fuel cell having mechanical properties which are adaptable to dimensional distortion in the environment in which a fuel cell operates.

That is, the present invention relates to a proton-conductive polymer membrane comprising a polymer compound having structural repeating units represented by the following formula (1) in which the aromatic units are partially substituted with proton-conductive substituents, 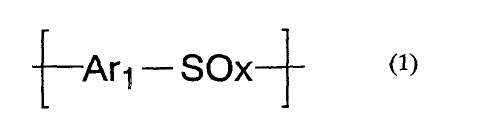 (wherein Ar₁ represents a divalent aromatic unit and x represents an integer of 0 to 2), wherein the polymer compound has a solubility in methanol at room temperature of less than 0.01 % by weight or solubility in N-methyl-2-pyrrolidone at 5°C of less than 5 % by weight.

Preferably, the polymer compound further comprises a plasticizer.

The plasticizer is preferably a phosphate type compound.

The phosphate type compound is preferably at least one member selected from the group consisting of triphenyl phosphate and tricresyl phosphate.

Preferably, Ar₁ is a divalent aromatic unit represented by any of formulas (2) to (11) in the formula (1).

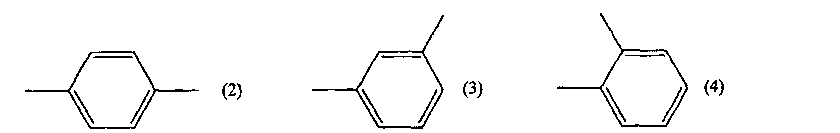

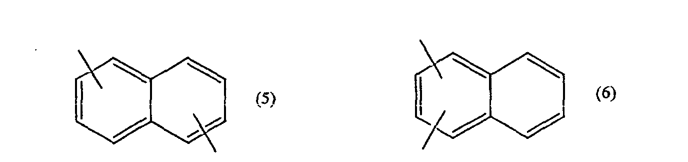

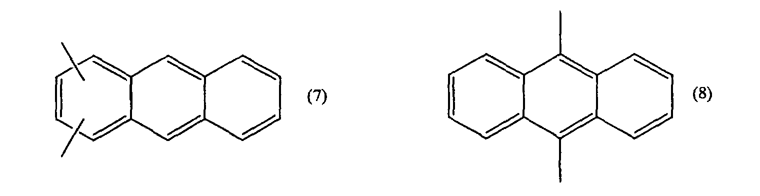

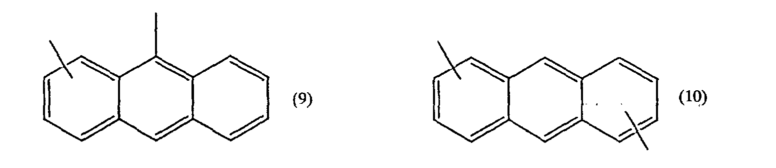

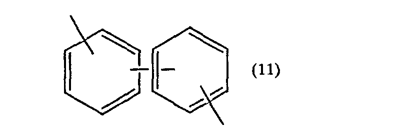

Preferably, Ar₁ is a divalent aromatic unit represented by any of formulas (2) to (4) and x is 0 in said formula (1).

The proton-conductive substituent is preferably a sulfonic acid group. In the proton-conductive polymer membrane, the amount of sulfide units in the polymer compound which are oxidized into sulfoxide or sulfone is preferably 0 to 10 % by mole based on the total amount of the repeating units.

At least one type of radiation selected from the group consisting of γ rays, electron beams and ion beams is preferably applied to the proton-conductive polymer membrane.

Radiation of 10 to 1000 kGy is preferably applied.

The ion exchange capacity of the proton-conductive polymer membrane is preferably 0. 5 to 8 miliequivalent/g.

The proton conductivity of the proton-conductive polymer membrane at room temperature is preferably at least 1.0 × 10⁻² S/cm.

The proton-conductive polymer membrane preferably has a thickness of 5 to 200 µm.

The present invention relates to a membrane for a fuel cell comprising the proton-conductive polymer membrane.

The present invention relates to a polymer electrolyte fuel cell using the proton-conductive polymer membrane.

The present invention relates to a process for preparing a proton-conductive polymer membrane which comprises contacting a polymer film comprising a polymer compound having structural repeating units represented by formula (1) with a sulfonating agent. 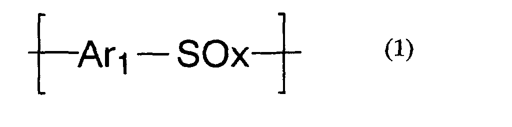 (wherein Ar₁ represents a divalent aromatic unit and x represents an integer of 0 to 2).

The sulfonating agent is preferably at least one member selected from the group consisting of chlorosulfonic acid, sulfur trioxide-triethyl phosphate, concentrated sulfuric acid, fuming sulfuric acid and trimethylsilyl chlorosulfate.

The amount of the sulfonating agent is preferably 0.5 to 10 equivalents based on said aromatic units of the polymer compound.

The sulfonating agent is preferably contacted with the polymer film in the presence of a solvent.

The concentration of the sulfonating agent within a mixed solution comprising the sulfonating agent and solvent is preferably 0.1 to 10 % by weight.

The solvent is preferably at least one member selected from the group consisting of 1,1,2,2-tetrachloroethane, 1,1,1,2-tetrachloroethane, 1,1,1-trichloroethane, 1,2-dichloroethane, trichloroethylene, tetrachloroethylene, dichloromethane and chloroform.

### BRIEF DESCRIPTION OF DRAWINGS

Fig. 1 is a diagram depicting the infrared absorption spectrum of the polymer compound (sulfonated polyphenylene sulfide) of Example 3.
Fig. 2 is a diagram depicting the infrared absorption spectrum of the polymer compound (sulfonated polyphenylene sulfide) of Comparative Example 4.
Fig. 3 is a cross sectional view depicting an example of a single cell using a proton-conductive polymer membrane as the membrane for a fuel cell.

### BEST MODE FOR CARRYING OUT THE INVENTION

The proton-conductive polymer membrane of the present invention has structural repeating units represented by the following formula (1). 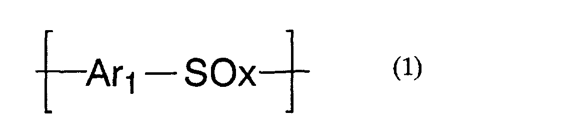 (wherein Ar₁ represents a divalent aromatic unit and x represents an integer of 0 to 2). The proton-conductive polymer membrane comprises a polymer compound in which preferably Ar₁ is a divalent aromatic monomer represented by any of the divalent aromatic units of formulas (2) to (11), 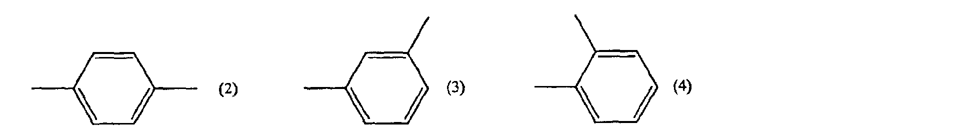 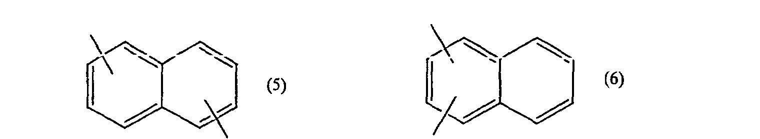 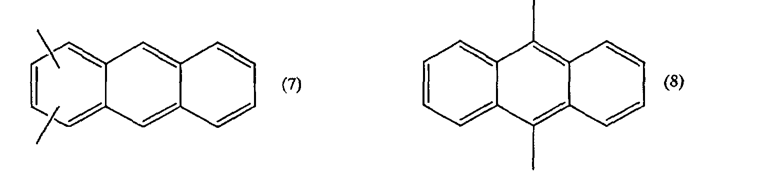 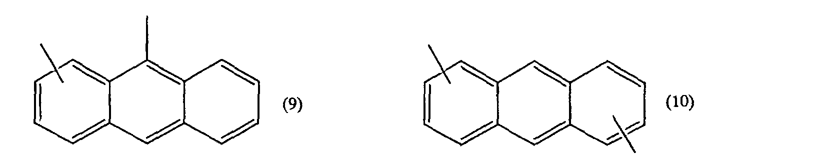 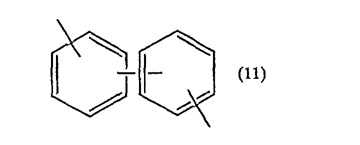 more preferably, any of the divalent aromatic monomers represented by formulas (2) to (4) and x is 0.

By using a polymer compound which has structural repeating units represented by the formula (1), superior proton conductivity is exhibited and the proton-conductive polymer membrane becomes excellent in physical and chemical stability.

Particularly, the polymer compound is preferably polyphenylene sulfide from the viewpoints of industrial availability and properties (proton conductivity, mechanical properties, chemical stability).

The molecular weight of the polymer compound is not particularly limited. However, from the viewpoint of ensuring properties which are useful when using as a proton-conductive polymer membrane (mechanical strength and elastic modulus), the number average molecular weight is preferably 2,000 to 200,000, more preferably 10,000 to 100,000. When the number average molecular weight is less than 2,000, processability is poor, disabling membrane formation, and the obtained membrane is brittle. Also, mechanical properties tend to become inferior, for example, the elongation becomes small. When the number average molecular weight is more than 200,000, acquiring the material becomes difficult industrially and processability such as handling properties when forming the membrane tends to become inferior, as the viscosity of the melted compound becomes high.

Part of Ar₁ (at most 10 %, more preferably at most 5 %) in the above formula (1) may be substituted with structural units represented by the following A, B and C when necessary. When the amount substituted is more than 10 %, obtaining the proton-conductive polymer membrane may become difficult and mechanical properties may become poor, for example elongation of the obtained proton-conductive polymer membrane is decreased. Also, a decrease in proton conductivity and gas barrier property tends to occur.
A. Part of the hydrogen atoms of the aromatic unit are substituted with at least one member selected from the group consisting of an alkyl group, alkoxy group, phenyl group, nitro group and halogen group having 1 to 6 carbon atoms,
B. Trifunctional phenyl unit (in this case, the one remaining dangling bond is attached to another polymer chain via a sulfide unit creating a crosslinked molecular structure),
C. Crosslinked or branched units other than the above B (in this case, the one remaining bond is attached to another polymer chain via a unit other than the sulfide unit creating a crosslinked molecular structure).

Examples of the proton-conductive substituent of the proton-conductive polymer membrane of the present invention are a sulfonic acid group, phosphoric acid group, carboxylic acid group and phenolic hydroxyl group. Of these, a sulfonic acid group is preferable in view of the proton conductivity of the obtained proton-conductive polymer membrane and ease in introducing the substituent. In the case of a sulfonic acid group, repeating units of polyphenylene sulfide containing a sulfonic acid group represented by the following formula (12) are preferable as the structural component (in the formula, n represents integers of 1 to 4).

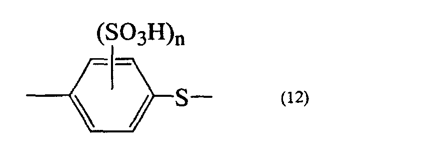

The proton-conductive polymer membrane comprising a polymer compound having structural repeating units represented by formula (1) in which the aromatic units are partially substituted with proton-conductive substituents has a solubility in methanol at room temperature of less than 0.01 % by weight or solubility in N-methyl-2-pyrrolidone at 5°C of less than 5 % by weight.

The solubility in methanol at room temperature is preferably less than 0.001 % by weight and is more preferably substantially insoluble. Here, room temperature means approximately 25°C. In a direct methanol fuel cell in which methanol is continuously supplied, when the solubility is more than 0.01 % by weight, the membrane gradually dissolves into the methanol, which is the fuel, causing decrease in properties and destruction of the membrane. In the case that the solubility in methanol at room temperature is less than 0.01 % by weight, the membrane may be applied in a direct methanol fuel cell.

The solubility in N-methyl-2-pyrrolidone at 5°C is preferably less than 1 % by weight and is more preferably substantially insoluble. Because proton-conductive substituents such as a sulfonic acid group are introduced after processing into a polymer film in the steps for preparing and high durability such as solvent resistance is required, solubility in solvents such as N-methyl-2-pyrrolidone is not required in the proton-conductive polymer membrane of the present invention and more preferably the membrane is insoluble.

The proton-conductive polymer membrane of the present invention preferably contains a plasticizer from the viewpoint of improving elongation of the membrane.

In consideration of maintaining properties of the membrane and the effects of adding the plasticizer, the amount added of the plasticizer in the proton-conductive polymer membrane of the present invention is 0.1 to 50 parts by weight, more preferably 1 to 20 parts by weight, based on 100 parts by weight of the polymer compound. When the amount is less than 0.1 parts by weight, the effects of adding a plasticizer (particularly improvement in elongation of the proton-conductive polymer membrane) tend to be insufficient. On the other hand, when the amount is more than 50 parts by weight, proton conductivity and mechanical properties such as tensile strength tend to decrease. Also, homogeneously mixing the polymer compound and the plasticizer may become difficult.

Examples of the plasticizer used in the present invention are phosphate type compounds such as tributyl phosphate, triphenyl phosphate and tricresyl phosphate, phthalate type compounds such as dimethyl phthalate, diethyl phthalate, dibutyl phthalate, diheptyl phthalate, di-n-octyl phthalate, di-2-ethylhexyl phthalate, diisononyl phthalate, octyldecyl phthalate, diisodecyl phthalate and butylbenzyl phthalate, aliphatic monobasic acid ester type compounds such as butyl oleate and glycerine monooleate, aliphatic dibasic acid ester type compounds such as di-n-butyl adipate, di-n-hexyl adipate, di-2-ethylhexyl adipate, alkyl adipate 610, di-2-ethylhexyl azelate, dibutyl sebacate and di-2-ethylhexyl sebacate, dihydric alcohol ester type compounds such as diethyleneglycol benzoate and triethyleneglycol di-2-ethyl butyrate, oxyacid ester type compounds such as methyl acetyl ricinolate, butyl acetyl ricinolate, butyl phthalyl butyl glycolate and acetyl tributyl citrate, chlorinated paraffin, chlorinated biphenyl-2-nitrobiphenyl, dinonyl naphthalene, o- toluenesulfone ethyl amide, p-toluenesulfone ethyl amide and methyl abietate.

Also, the plasticizer used in the present invention preferably has a boiling point of at least 300°C under a pressure of 101 kPa. In the case that the polymer compound and plasticizer are melt mixed, if the boiling point of the plasticizer is significantly lower than the melting temperature of the polymer compound, the plasticizer evaporates and the desired compounding ratio may not be obtained. Though the melting temperature of the polymer compound and the conditions for melt mixing the polymer compound and plasticizer must be considered accordingly, the boiling point under a pressure of 101 kPa of the plasticizer is preferably at least 300°C. When the boiling point under a pressure of 101 kPa of the plasticizer is less than 300°C, as mentioned above, the plasticizer evaporates and the desired compounding ratio may not be obtained. Examples of such a plasticizer are triphenyl phosphate, tricresyl phosphate, dibutyl phthalate, diisononyl phthalate, diisodecyl phthalate, buytlbenzyl phthalate, dibutyl sebacate and di-2-ethylhexyl sebacate.

Furthermore, of the above plasticizers, using a phosphate type compound is preferable in view of compatibility with the polymer compound and imparting flame resistance. Particularly, triphenyl phosphate and tricresyl phosphate are preferable from the viewpoint of the plasticizing effect to the proton-conductive polymer membrane, industrial availability and little influence to properties such as proton conductivity and gas barrier properties.

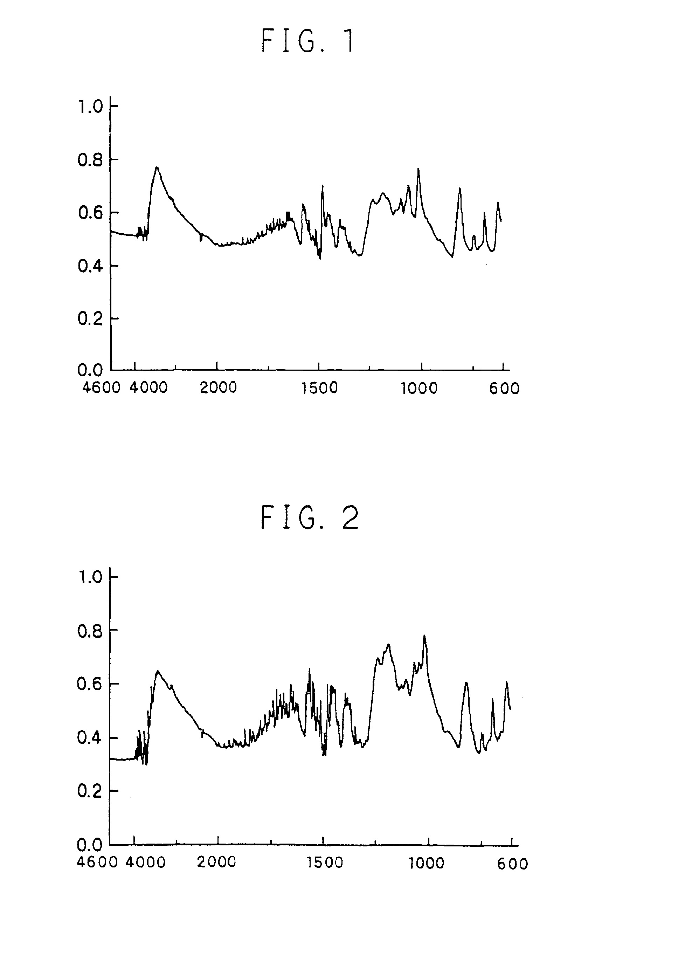

The infrared absorption spectrum properties of the proton-conductive polymer membrane of the present invention are described below referring to Figs. 1 and 2. Here, the horizontal axis represents wave number (cm⁻¹) and the vertical axis represents infrared absorption. In the wave number range for measuring infrared absorption spectrum of 1000 to 1080 cm⁻¹, the proton-conductive polymer membrane of the present invention preferably only has absorption peaks within 1000 to 1020 cm⁻¹ and 1050 to 1070 cm⁻¹. The absorption peaks within these ranges are not necessarily attributed to structure and correlation with the properties is not clear. However, compared to a proton-conductive polymer membrane also having an absorption peak within 1020 to 1040 cm⁻¹, the proton-conductive polymer membrane of the present invention is low in solvent solubility and when used as a membrane for a fuel cell, the range from which the fuel to be used is selected tends to become wider.

Of the sulfide units in the polymer compound, the amount oxidized to sulfoxide or sulfon is preferably 0 to 10 % by mole based on the total amount of repeating units represented in formula (1). The relationship between the amount of the structural units and the properties are not clear. However, when compared to a proton-conductive polymer membrane having more than 10 % by mole of sulfoxide units, the proton-conductive polymer membrane of the present invention is low in solvent solubility and when used as a membrane for a fuel cell, the range from which the fuel to be used is selected tends to become wider.

At least one type of radiation selected from the group consisting of γ rays, electron beams and ion beams is preferably applied to the proton-conductive polymer membrane of the present. By modifying the proton-conductive polymer membrane by exposing radiation, the proton conductivity of the proton-conductive polymer membrane is improved. Particularly, from the viewpoints of the amount of radiation, permeability into the material and exposure time (industrial continuous exposure), electron beams are preferable.

Any of the atmospheres of air, oxygen free atmosphere or vacuum atmosphere may be selected as the atmosphere for exposing radiation. An atmosphere in which deterioration of the proton-conductive polymer membrane by radiation exposure does not occur can suitably be selected. Also, in order to effectively conduct modification of the proton-conductive polymer membrane by radiation exposure, the atmosphere for exposing and the membrane may be heated. At this time, conditions in which deterioration of the proton-conductive polymer membrane material does not occur can suitably be selected.

The acceleration voltage of the radiation is preferably 0.01 to 5.0 MeV. When the acceleration voltage is lower than 0.01 MeV, the permeability of the radiation into the material becomes low and obtaining a membrane which is homogeneous to the inside of the material tends to become difficult. Also, exposure over a long time becomes necessary in order to attain the necessary amount of radiation and productivity tends to decrease significantly. When the voltage is more than 5.0 MeV, the device becomes larger in scale than necessary and deterioration in material tends to be advanced.

The amount of radiation applied is preferably 10 to 1000 kGy. When the amount of radiation is less than 10 kGy, the effects of exposure tend to be insufficient. When the amount is more than 1000 kGy, the effects of exposure become saturated, the exposure time becomes long and deterioration in material and decrease in properties tend to occur.

The ion exchange capacity of the proton-conductive polymer membrane of the present invention is determined by the conditions of the reaction of an agent for introducing an ion exchange group (for example sulfonating agent when introducing a sulfonic acid group) and the polymer compound. More specifically, the ion exchange capacity can be adjusted by the amount added of the ion exchange group introducing agent, the type of solvent and concentration of the ion exchange group introducing agent when conducting the reaction in the presence of a solvent, the reaction time and reaction temperature. In reality, these conditions are accordingly set so that the ion exchange capacity is within the desired range.

The ion exchange capacity is preferably within the range of 0.5 to 8 miliequivalent/g, more preferably 0.8 to 3 miliequivalent / g. When the ion exchange capacity is less than 0.5 miliequivalent/g, the amount of proton-conductive substituents such as sulfonic acid groups which are introduced becomes small and the proton conductivity tends to become insufficient. On the other hand, when the ion exchange capacity is more than 8 miliequivalent/g, handling properties tend to decrease as the proton-conductive polymer membrane is decreased in mechanical strength and becomes water soluble. Furthermore, using the membrane as a membrane for a fuel cell tends to become difficult.

The proton conductivity of the proton-conductive polymer membrane at room temperature is preferably at least 1.0 × 10⁻² S/cm, more preferably at least 5.0 × 10⁻² S/cm. When the proton conductivity is smaller than 1.0 × 10⁻² S/cm, electricity generating properties tend to be insufficient when used as a membrane for a fuel cell. Particularly, imparting solvent solubility by increasing the amount of proton-conductive substituents such as sulfonic acid groups which are introduced, in order to improve handling properties of the polymer compound, must be conducted with care, as solubility in methanol which may be used as the fuel is also increased.

The thickness of the proton-conductive polymer membrane of the present invention is better the thinner the membrane is, within the range in which practical mechanical strength and the effect of blocking fuel and oxidants are obtained. Regarding the properties of a membrane for a fuel cell, when ion exchange capacity and proton conductivity are equal, the resistance value of the membrane becomes lower the thinner the thickness is. Therefore, the thickness is preferably 5 to 200 µm, more preferably 20 to 150 µm. When the thickness is less than 5 µm, pinholes and fracture of the membrane tend to occur during use. Also, when used as a membrane for a fuel cell, the gas barrier property tends to become insufficient, which tends to become a factor in decrease in performance. On the other hand, when the thickness is more than 200 µm, the resistance of the proton-conductive polymer membrane become large, which tends to become a factor in decrease in performance.

The proton-conductive polymer membrane of the present invention has the properties of proton conductivity, gas barrier property and chemical and thermal stability, which are required in a membrane for a fuel cell, and is suitably used as a membrane for a fuel cell. In the conventional method in which perfluorocarbon sulfonic acid membrane such as Nafion is used, the proton-conductive polymer membrane of the present invention may be used as the membrane for the fuel cell instead of using perfluorocarbon sulfonic acid membrane.

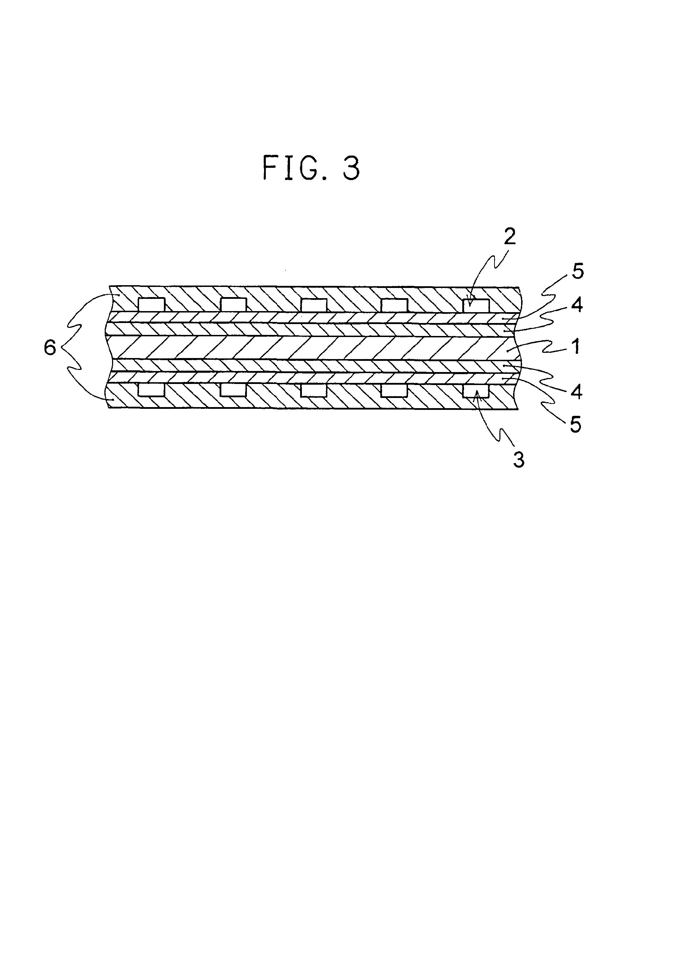

An example of a single cell using a proton-conductive polymer membrane as the membrane for a fuel cell is described below referring to Fig. 3. Electrode 5 on which catalyst layer 4 is formed is located on both sides of proton-conductive polymer membrane 1 of the present invention. Catalyst layer 4 is located to the side of proton-conductive polymer membrane 1 on electrode 5. As electrode 5, carbon paper or carbon cloth is suitably used. As catalyst layer 4, platinum or platinum-ruthenium supporting carbon is suitably used. Catalyst layer 4 is formed on one side of electrode 5 with a perfluorocarbon sulfonic acid polymer, proton-conductive polymer compound similar to the proton-conductive polymer membrane of the present invention or another polymer compound having proton conductivity as a binder, in addition to a water repelling agent added when necessary. As the method for adhesion of proton-conductive polymer membrane 1 and catalyst layer 4, applying an organic solvent solution of a polymer compound having proton conductivity (a perfluorocarbon sulfonic acid polymer, sulfonated polymer compound similar to the proton-conductive polymer membrane of the present invention or another polymer compound having proton conductivity) on catalyst layer 4, removing the solvent and joining by hot pressing is suitable. On electrode 5, separator 6 having fuel flow path 2 is located and on the other electrode 5, separator 6 having oxidant flow path 3 is located. Hydrogen, hydrogen gas reformed from methanol, natural gas and gasoline and vapor or liquid of organic compounds containing hydrogen such as methanol and dimethylether are suitably used as fuel. As the oxidant, air and oxygen are suitably used. For separator 6, carbon graphite is suitably used. When another method can be used as the method for supplying the fuel and oxidant, separator 6 is not necessarily required.

The single cell using proton-conductive polymer membrane of the present invention as the membrane for a fuel cell exhibits excellent electricity generating properties as proton conductivity and gas barrier property are excellent and is inexpensive compared to a cell using a perfluorocarbon sulfonic acid membrane. Therefore, a single cell using the proton-conductive polymer membrane of the present invention as the membrane for a fuel cell is suitably used in a polymer electrolyte fuel cell for automobiles, fixed household products and compact portable devices such as cellular phones, laptops and PDAs and in a direct methanol fuel cell. In such a case, in order to obtain the desired electricity generating properties, the single cell may preferably be used by forming stacks, by piling up a plurality of the single cells or by placing on a flat plane and wiring the electrodes in series.

Below, the process for preparing the proton-conductive polymer membrane of the present invention is described. The process is conducted by contacting a sulfonating agent with a polymer film comprising a polymer compound having structural repeating units represented by the following formula (1) 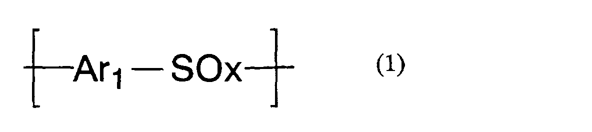 (wherein Ar₁ represents a divalent aromatic unit, preferably a divalent aromatic unit represented by formulas (2) to (11) 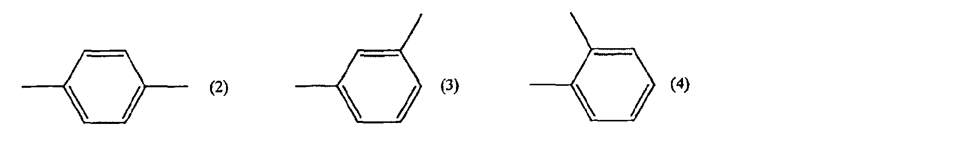 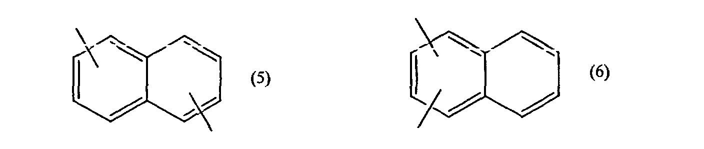 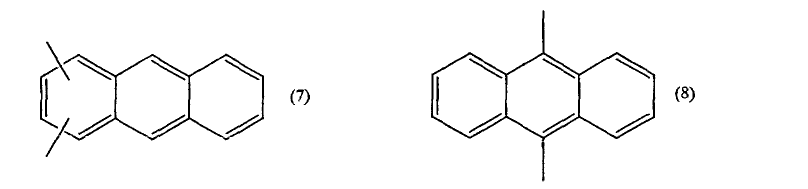 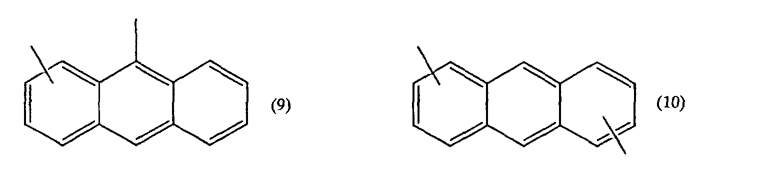 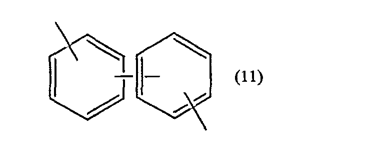 and x represents an integer of 0 to 2), more specifically repeating units in which Ar₁ is a divalent aromatic unit represented by any of formulas (2) to (4) and x is 0 in formula (1).

In the present invention, because a polymer film comprising a polymer compound having structural repeating units represented by the above formula (1) (hereinafter polymer film) is used, the membrane is excellent in chemical stability and deterioration of the film in the contacting step hardly occurs even when contacted with the sulfonating agent. Also, a polymer film, in which in the above formula (1), Ar₁ is a divalent aromatic unit, more preferably a divalent aromatic unit represented by formulas (2) to (11) and x is an integer of 0 to 2, is preferable from the viewpoint of physical and chemical properties and industrial availability.

The proton-conductive polymer membrane of the present invention is prepared by contacting the above polymer film having structural repeating units represented by the above formula (1) with a sulfonating agent. As a result, the obtained proton-conductive polymer membrane can be used as it is for a proton-conductive membrane of a polymer electrolyte fuel cell without special processing steps except for rinsing and drying.

As the thickness of the polymer film, any thickness may be selected depending on the use. However, in consideration of homogeneously introducing the sulfonic acid group into the polymer film and decreasing the inner resistance of the proton-conductive polymer membrane, the thickness is preferably 1.2 to 350 µm. When the thickness of the polymer film is thinner than 1.2 µm, preparation is difficult and handling properties tend to become poor, such as wrinkling and breaking occur when processing. When the thickness exceeds 350 µm, evenly sulfonating to the interior becomes difficult and the inner resistance of the obtained proton-conductive polymer membrane tends to become large. As the sulfonating agent used in the present invention, a known sulfonating agent of aromatic hydrocarbon compounds may be used. In consideration of ease in introducing the sulfonic acid group, the sulfonating agent is preferably at least one member selected from the group consisting of chlorosulfonic acid, sulfur trioxide-triethyl phosphate, concentrated sulfuric acid, fuming sulfuric acid and trimethylsilyl chlorosulfate. Particularly, in view of ease in introducing the sulfonic acid group, chlorosulfonic acid is preferable.

The amount used of the sulfonating agent is preferably 0.5 to 10 equivalents, more preferably 0.5 to 5 equivalents based on the aromatic units (for example units represented by formulas (2) to (11)) within the repeating units represented by formula (1). When the amount used of the sulfonating agent is less than 0.5 equivalents, the amount of sulfonic acid groups which are introduced becomes small and the properties of the obtained proton-conductive polymer membrane tend to become insufficient. On the other hand, when the amount is more than 10 equivalents, handling becomes difficult as the polymer film deteriorates chemically and the mechanical strength of the obtained proton-conductive polymer membrane decrease. Also, the amount of sulfonic acid groups which are introduced becomes too large which then tends to damage the practical properties of the proton-conductive polymer membrane.

The method for contacting the polymer film and the sulfonating agent is not particularly limited. However, the sulfonating acid groups are preferably homogeneously introduced into the polymer film having structural repeating units represented by formula (1) and also, deterioration of the membrane properties (e.g. decrease in mechanical strength) due to direct contact with the sulfonating agent and introducing excessive sulfonic acid groups are preferably prevented. Therefore, contacting the sulfonating agent with the polymer film in the presence of a solvent is preferable.

As the above solvent, a solvent which does not substantially react with the sulfonating agent and does not cause deterioration of the polymer film may be used. A solvent which does not substantially react with the sulfonating agent refers to a solvent which does not decompose the sulfonating agent or a solvent which will not be sulfonated. Particularly, a solvent or mixed solution of a solvent and sulfonating agent, which tends to cause swelling of the polymer film, is preferable, in consideration of homogeneously introducing the sulfonic acid group into the polymer film.

The concentration of the sulfonating agent within the mixed solution comprising the sulfonating agent and the solvent is preferably 0.1 to 10 % by weight and a more preferable range is 0.2 to 5 % by weight. When the concentration is lower than 0.1 % by weight, introducing the desired sulfonic acid groups tends to be difficult and take too much time as the sulfonating agent and the aromatic units within the polymer compound have difficulty contacting. On the other hand, when the concentration is higher than 10 % by weight, introduction of the sulfonic acid groups tend to become inhomogeneous and mechanical properties of the obtained proton-conductive polymer membrane tend to be lost. In the present invention, the sulfonating agent may be used alone and the concentration of the sulfonating agent up to 100 % by weight, at which a solvent is not used, is within the scope of the present invention.

Examples of the solvent are a hydrocarbon solvent such as n-hexane, ether solvents such as tetrahydrofuran and dioxane, sulfoxide solvents such as dimethylsulfoxide and diethylsulfoxide, formamide solvents such as N,N-dimethylformamide and N,N-diethylformamide, acetamide solvents such as N,N-dimethylacetamide and N,N-diethylacetamide, pyrrolidone solvents such as N-methyl-2-pyrrolidone and N-vinyl-2-pyrrolidone, 1,1,2,2-tetrachloroethane, 1,1,1,2-tetrachloroethane, 1,1,1-trichloroethane, 1,2-dichloroethane, trichloroethylene, tetrachlrorethylene, dichloromethane and chloroform. These may be used alone or in a combination of two or more kinds. Of these, at least one member selected from the group consisting of 1,1,2,2-tetrachloroethane, 1,1,1,2-tetrachloroethane, 1,1,1-trichloroethane, 1,2-dichloroethane, trichloroethylene, tetrachloroethylene, dichloromethane and chloroform are particularly preferable from the viewpoints of easiness in controlling the amount of sulfonic acid groups which are introduced and excellent physical and chemical properties of the obtained proton-conductive polymer membrane.

The reaction temperature and time when contacting the polymer membrane and the sulfonating agent are not particularly limited but is preferably set within the range of 0 to 100°C, more preferably 10 to 30°C, and at least 0. 5 hour, more preferably 2 to 100 hours. When the reaction temperature is lower than 0°C, measures for cooling become necessary regarding equipment and the reaction takes more time than necessary. When the temperature is higher than 100°C, the properties of the membrane tend to decrease as the reaction progresses excessively and side reactions occur. Also, when the reaction time is shorter than 0.5 hour, contact of the sulfonating agent and the aromatic units within the polymer compound is insufficient and introducing the desired sulfonic acid groups tends to become difficult. When the reaction time is more than 100 hours, the productivity tends to decrease significantly and a large improvement in membrane properties cannot be expected. In reality, these conditions are set so that a proton-conductive polymer membrane having the desired properties can be prepared efficiently, considering the reaction system of the sulfonating agent and solvent which are used and the targeted production amount.

The introduction of sulfonic acid groups into the polymer membrane is described below by specific examples.

When chlorosulfonic acid is used as the sulfonating agent and dichloromethane is used as the solvent, a chlorosulfonic acid/dichloromethane solution of the specified amount and concentration is prepared and a polymer film is immersed into the solution at the above temperature for the above time. As a result, the hydrogen atoms within the aromatic units contained in the polymer film are substituted with SO₂Cl. Furthermore, by contacting this membrane with water, the SO₂Cl groups are hydrolyzed to become sulfonic acid groups (-SO₃H) and the remaining dichloromethane and chlorosulfonic acid are removed. Also, a method for converting into sulfonic acid groups, in which after substituting with SO₂Cl, alkali treatment with sodium hydroxide is conducted to form sodium sulfonate, followed by acid treatment with sulfuric acid or hydrochloric acid, may be selected.

However, from the viewpoint of providing a more simple preparation method by which production costs are substantially decreased, which is the purpose of the present invention, the method of hydrolyzing by water is most preferable.

Depending on the sulfonating agent which is used and the reaction conditions for sulfonation, side reactions may occur in which the sulfide units (-S-) within the polymer film are oxidized into sulfoxide units (-SO-) or sulfone units (-SO₂-), the sulfoxide units (-SO-) are oxidized into sulfone units (-SO₂- or the hydrogen in the phenylene units are substituted by substituents such as Cl. However, as long as the properties of the obtained proton-conductive polymer membrane are not decreased significantly, structural units produced as a result of the above side reactions may be included.

The concentration of chlorosulfonic acid when chlorosulfonic acid is used alone or in the presence of a solvent may be accordingly set taking into account, the targeted amount of sulfonic acid groups to be introduced and the reaction conditions (temperature and time).

When preparing the proton-conductive polymer membrane by the above process of the present invention, additives such as an antioxidant, antistatic agent, antibacterial agent, lubricant or surface active agent may be included in the polymer membrane.

The process for preparing the proton-conductive polymer membrane of the present invention is described below by more specific examples. As a process for preparing a proton-conductive polymer membrane, various methods may be applied. For example, a polymer compound in which solvent soluble proton-conductive substituents are substituted is prepared, mixed with a plasticizer in a solvent solution of the polymer compound and applied by flow casting to a supporting member. Then, the solvent is removed to obtain the proton-conductive polymer membrane. However, imparting solvent solubility so as to be able to prepare a proton-conductive polymer membrane by the above method is generally difficult for the polymer compound used in the present invention. Therefore, the proton-conductive polymer membrane of the present invention is preferably obtained by the preparation process comprising the following steps of (I) to (III). (I): A step of melt mixing a polymer compound having structural repeating units represented by formula (1) and a plasticizer, (II): a step of forming the mixture of the polymer compound and plasticizer obtained in the above step (I) into a polymer film and (III): a step of introducing proton-conductive substituents into the polymer film obtained in the above step (II) (in the formula, Ar₁ represents a divalent aromatic unit and x represents an integer of 0 to 2).

When proton-conductive substituents are introduced before the step described above in (I) of melt mixing with a plasticizer and the step described above in (II) of forming into a polymer film, the proton-conductive substituents may be eliminated when processing the proton-conductive polymer membrane. Also, homogeneously mixing the plasticizer after forming the polymer compound into a film tends to become difficult.

As the method for melt mixing the polymer compound and plasticizer described above in (I), known methods using for example a heating roller, single screw extruder, twin screw extruder or single screw-twin screw combined extruder may be applied. In consideration of continuous preparation and homogeneous mixing, using a single screw or twin screw extruder is preferable.

As the step described above in (II), the method of forming a polymer film by melting the mixture with a heat press, T-die film forming by extruding the melted mixture from a T-dice or any other known method for processing a polymer film may be applied. In consideration of continuous preparation and homogeneity of the obtained polymer film, T-die film forming is preferable.

In the process for preparing the proton-conductive polymer membrane of the present invention, the proton-conductive substituent is preferably a sulfonic acid group and the step described above in (III) is preferably a method in which the polymer film obtained by the step described above in (II) is contacted with a sulfonating agent. As described above, when properties such as proton conductivity of the proton-conductive polymer membrane are considered, the proton-conductive substituent is preferably a sulfonic acid group and as a method for introducing the sulfonic acid group, contacting the polymer film comprising the mixture of a polymer compound and plasticizer with a sulfonating agent is preferable. As the sulfonating agent used here, any known as a sulfonating agent of aromatic hydrocarbon compounds may be used. When considering ease in introducing the sulfonic acid groups and industrial availability, at least one member selected from the group consisting of chlorosulfonic acid, sulfur trioxide-triethyl phosphate, concentrated sulfuric acid, fuming sulfuric acid and trimethylsilyl chlorosulfate is preferable. Particularly, in the present invention, chlorosulfonic acid is preferable from the viewpoint of ease in introducing the sulfonic acid groups and chemical and physical properties of the obtained membrane. Also, these sulfonating agents may be directly contacted with the polymer film and may be used together with a suitable solvent so that the polymer film can easily swell, in order to homogeneously introduce the sulfonic acid groups to the inside.

Also, in order to further improve the properties of the proton-conductive polymer membrane obtained by the above method, radiation such as electron beams, γ rays and ion beams is preferably applied. Hereinafter, the process of the present invention is described in detail by means of Examples, but not limited thereto and can accordingly be carried out in modifications within the range in which the purpose of the present invention is not changed.

The evaluation methods used in Examples are described below.

### (Ion exchange capacity)

A sample was immersed in a saturated aqueous solution of sodium chloride and reacted for 3 hours at 60°C in a water bath. After cooling to room temperature, the sample was thoroughly rinsed with ion exchanged water and titration was conducted with a 0.01 N sodium hydroxide aqueous solution using phenolphthalein solution as an indicator, to calculate the ion exchange capacity.

### (Proton conductivity)

A sample (10 mm x 40 mm) stored in ion exchanged water was taken out and the water on the sample surface was wiped with filter paper. The sample was loaded between platinum electrodes of an electrode distance of 30 mm and installed on a bipolar non-sealed system cell made of Teflon. Then, the membrane resistance of the sample was measured under the conditions of room temperature and voltage of 0.2 V by the alternating impedance method (frequency: 42 Hz to 5 MHz) to calculate the proton conductivity.

### (Measurement of infrared absorption spectrum)

A KBr tablet sample was prepared using FTIR8100 made by Shimadzu Corporation and the infrared absorption spectrum was measured.

### (Solubility in methanol)

In an atmosphere of room temperature (approximately 25°C), the specified sample was weighed and put in a glass flask. Then, methanol was added so that the concentration of the sample became 0.01 % by weight and the mixture was stirred with a stirrer. The solubility was determined by visual observation.

### (Solubility in N-methyl-2-pyrrolidone)

In an atmosphere of 5°C, the specified sample was weighed and put in a glass flask. Then, N-methyl-2-pyrrolidone was added so that the concentration of the sample became 5 % by weight and the mixture was stirred with a stirrer. The solubility was determined by visual observation.

### (Measurement of tensile strength and elongation at break)

The tensile strength and elongation at break of the specified sample was measured according to the method of JIS K 7127.

### (Analysis of sulfide or sulfoxide within the main chain)

The ratio (Area %) of peaks based on S within the main chain was found using a XPS analysis device (made by Phi, Inc., Quantum 2000) under the analysis conditions of a X-ray intensity of AIK α/ 15kV·12.5W, X-ray beam diameter of 100 µmφ and pulse energy of 187.85eV (wide)·23.50eV (narrow).

### EXAMPLE 1

A polymer film comprising polyphenylene sulfide (product name: Torelina, available from Toray Industries, Inc., membrane thickness 50 µm) was used.

Here, the above polymer film comprising polyphenylene sulfide has a main component in which Ar₁ is formula (2) and x is 0 in the above formula (1).

50 g of dichloromethane and 0.117 g of chlorosulfonic acid were weighed and put in a 50 mL glass flask to prepare a chlorosulfonic acid solution. 0.117 g of the above polymer film was weighed, contacted with the chlorosulfonic acid solution by immersion and left for 20 hours at room temperature (the amount of chlorosulfonic acid was 1 equivalent based on the aromatic unit of polyphenylene sulfide).

After leaving for 20 hours at room temperature, the proton-conductive polymer membrane was recovered and rinsed with ion exchanged water until neutral. Then, the obtained proton-conductive polymer membrane was immersed in 50 mL of ion exchanged water and left for 20 hours at room temperature. Then, the proton-conductive polymer membrane was recovered and dried under reduced pressure at 80°C for 3 hours to obtain the proton-conductive polymer membrane of the present invention which is sulfonated polyphenylene sulfide.

The obtained sulfonated polyphenylene sulfide membrane maintained the membrane shape and regarding this membrane, the ion exchange capacity was 1.47 miliequivalent/g and the proton conductivity at room temperature was 5.2 × 10⁻² S/cm. The evaluation results are shown in Table 1.

### EXAMPLE 2

The proton-conductive polymer membrane of the present invention which is sulfonated polyphenylene sulfide was obtained in the same manner as in Example 1 except that the amount of chlorosulfonic acid was 0.232 g and the amount of the polymer film was 0.1077 g (the amount of chlorosulfonic acid was 2 equivalents based on the aromatic unit of polyphenylene sulfide).

The obtained sulfonated polyphenylene sulfide membrane maintained the membrane shape and regarding this membrane, the ion exchange capacity was 1.92 miliequivalent/g and the proton conductivity at room temperature was 1.2 × 10⁻¹ S/cm. The evaluation results are shown in Table 1.

### COMPARATIVE EXAMPLE 1

Syndiotactic polystyrene film (product name: Xarec, available from Idemitsu Petrochemical Co., Ltd., membrane thickness: 50 µm) was used as the polymer film.

A sulfonated syndiotactic polystyrene membrane was obtained in the same manner as in Example 1 except that the amount of chlorosulfonic acid was 0.157 g and the amount of the polymer film was 0.1405 g (the amount of chlorosulfonic acid was 1 equivalent based on the aromatic unit of syndiotactic polystyrene).

The obtained sulfonated syndiotactic polystyrene membrane shrunk significantly and the membrane state was hardly maintained. Also, when immersed in ion exchanged water to measure proton conductivity, the membrane swelled significantly and the strength decreased significantly. The ion exchange capacity of this membrane was 4.45 miliequivalent/g and the proton conductivity was 1.1 × 10⁻¹ S/cm. However, handling as a proton-conductive polymer membrane was substantially impossible. The evaluation results are shown in Table 1.

### COMPARATIVE EXAMPLE 2

Polyether ether ketone film (product name: Sumilite FS-1100C, available from Sumitomo Bakelite Co., Ltd., membrane thickness: 50 µm) was used as the polymer film.

Sulfonation was attempted in the same manner as in Example 1 except that the amount of chlorosulfonic acid was 0.116 g and the amount of the polymer film was 0.0954 g (the amount of chlorosulfonic acid was 1 equivalent based on the aromatic unit of polyether ether ketone). However, as soon as the polymer film was contacted with the chlorosulfonic acid solution by immersion, the membrane dissolved while shrinking significantly and a sulfonated polyether ether ketone membrane could not be obtained. The evaluation results are shown in Table 1.

### COMPARATIVE EXAMPLE 3

Perfluorocarbon sulfonic acid membrane (product name: Nafion 117, available from Dupont Co., membrane thickness: 175 µm) was used as the proton-conductive polymer membrane for a polymer electrolyte fuel cell. Regarding this membrane, the ion exchange capacity was 0.94 miliequivalent/g and the proton conductivity was 9.5 × 10⁻² S/cm. The evaluation results are shown in Table 1.

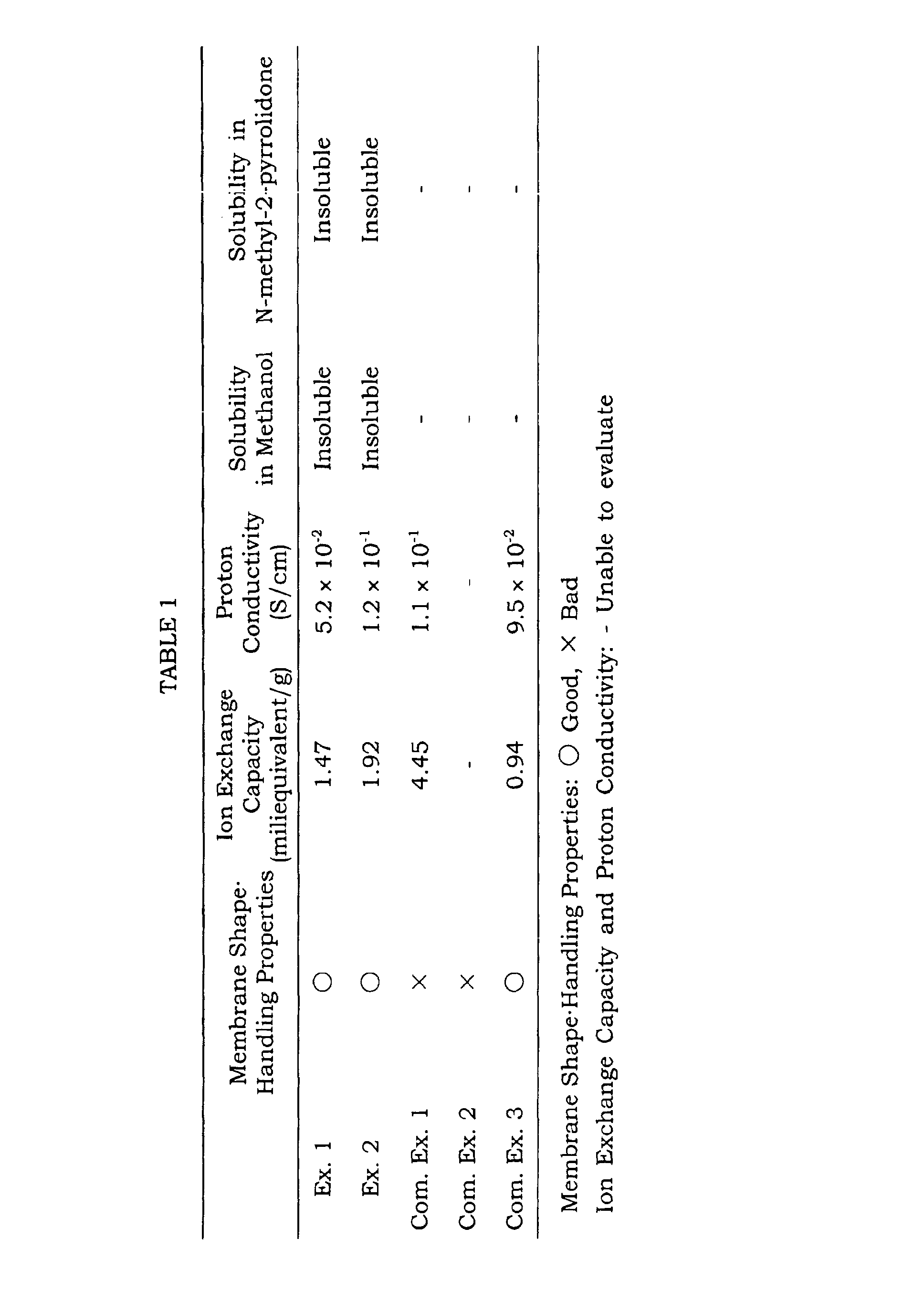

The results of Examples 1 and 2 show that the sulfonated polymer membrane of the present invention is a sulfonated polyphenylene sulfide membrane having practical properties and handling properties which can be obtained by a method which is more simple than the conventional.

From comparing Example 2 and Comparative Example 3, the sulfonated polymer membrane of the present invention was found to exhibit proton conductivity of a level which is applicable in a proton-conductive polymer membrane for a polymer electrolyte fuel cell.

From comparing Examples 1 and 2 and Comparative Examples 1 and 2, the sulfonated polymer membrane of the present invention was found to be excellent in chemical stability and handling properties compared to a polymer membrane which does not have repeating units represented by formula (1) as the main structural component such as syndiotactic polystyrene and polyether ether ketone.

### EXAMPLE 3

The polymer film comprising polyphenylene sulfide (product name: Torelina, available from Toray Industries, Inc., membrane thickness 50 µm) used in Example 1 was used.

966 g of dichloromethane and 4.83 g of chlorosulfonic acid were weighed and put in a 900 mL glass flask to prepare a chlorosulfonic acid solution. 2.24 g of the above polymer film was weighed, contacted with the chlorosulfonic acid solution by immersion and left for 20 hours at room temperature (the amount of chlorosulfonic acid was 1 equivalent based on the aromatic unit of polyphenylene sulfide).

After leaving for 20 hours at room temperature, the polymer membrane was recovered and rinsed with ion exchanged water until neutral.

Then, the polymer membrane was left in a constant temperature and humidity chamber adjusted to 23°C and a relative humidity of 98 %, 80 %, 60 % and 50 % respectively for 30 minutes and dried to obtain a polyphenylene sulfide membrane into which sulfonic acid groups were introduced (hereinafter sulfonated polyphenylene sulfide membrane).

The obtained sulfonated polyphenylene sulfide membrane maintained the membrane shape and regarding this membrane, the ion exchange capacity was 1.45 miliequivalent/g and the proton conductivity at room temperature was 4.1 × 10⁻² S/cm. The evaluation results are shown in Table 2. The infrared absorption spectrum is shown in Fig. 1.

### EXAMPLE 4

Electron beams of an acceleration voltage of 4.6 MeV and an exposure amount of 60 kGy was applied to the sulfonated polyphenylene sulfide membrane obtained in Example 3. The properties of the sulfonated polyphenylene sulfide membrane were evaluated.

The obtained sulfonated polyphenylene sulfide membrane maintained the membrane shape and regarding this membrane, the ion exchange capacity was 1.51 miliequivalent/g and the proton conductivity at room temperature was 4.9 × 10⁻² S/cm. The evaluation results are shown in Table 2.

### EXAMPLE 5

The experiment was conducted in the same manner as in Example 4 except that the exposure amount of electron beams was 100 kGy. The obtained sulfonated polyphenylene sulfide membrane maintained the membrane shape and regarding this membrane, the ion exchange capacity was 1.45 miliequivalent/g and the proton conductivity at room temperature was 5.3 × 10⁻² S/cm. The evaluation results are shown in Table 2.

### EXAMPLE 6

The experiment was conducted in the same manner as in Example 4 except that the exposure amount of electron beams was 300 kGy. The obtained sulfonated polyphenylene sulfide membrane maintained the membrane shape and regarding this membrane, the ion exchange capacity was 1.49 miliequivalent/g and the proton conductivity at room temperature was 5.2 × 10⁻² S/cm. The evaluation results are shown in Table 2.

### EXAMPLE 7

The experiment was conducted in the same manner as in Example 4 except that the exposure amount of electron beams was 500 kGy. The obtained sulfonated polyphenylene sulfide membrane maintained the membrane shape and regarding this membrane, the ion exchange capacity was 1.57 miliequivalent/g and the proton conductivity at room temperature was 7.5 × 10⁻² S/cm. The evaluation results are shown in Table 2.

### COMPARATIVE EXAMPLE 4

15 g of 1,4-polyphenylene sulfide (available from Aldrich, weight average molecular weight: 10000) was dissolved into 300 mL of chlorosulfonic acid in a 500 mL separable flask. The solution was cooled with ice and stirred for 60 minutes at a reaction temperature of 5°C. Then, the reaction solution was set to 20°C and stirred for 300 minutes after dropping 100 mL of fuming sulfuric acid (15 % SO₃). The reaction solution was added to a mixture of 2 kg of ice and 600 mL of sulfuric acid (30 % by weight) while stirring. The precipitate was rinsed in boiling ion exchanged water and recovered by filtration. Drying was conducted for 3 hours at 80°C and polyphenylene sulfide into which sulfonic acid groups were introduced (hereinafter sulfonated polyphenylene sulfide) was obtained.

A N-methyl-2-pyrrolidone solution containing 20 % by weight of sulfonated polyphenylene sulfide was prepared, flow casted onto a glass chalet and dried under reduced pressure at 150°C but an even membrane could not be obtained. Therefore, the properties of sulfonated polyphenylene sulfide (powder) before forming into a membrane were evaluated. The evaluation results are shown in Table 2. The infrared absorption spectrum is shown in Fig. 2.

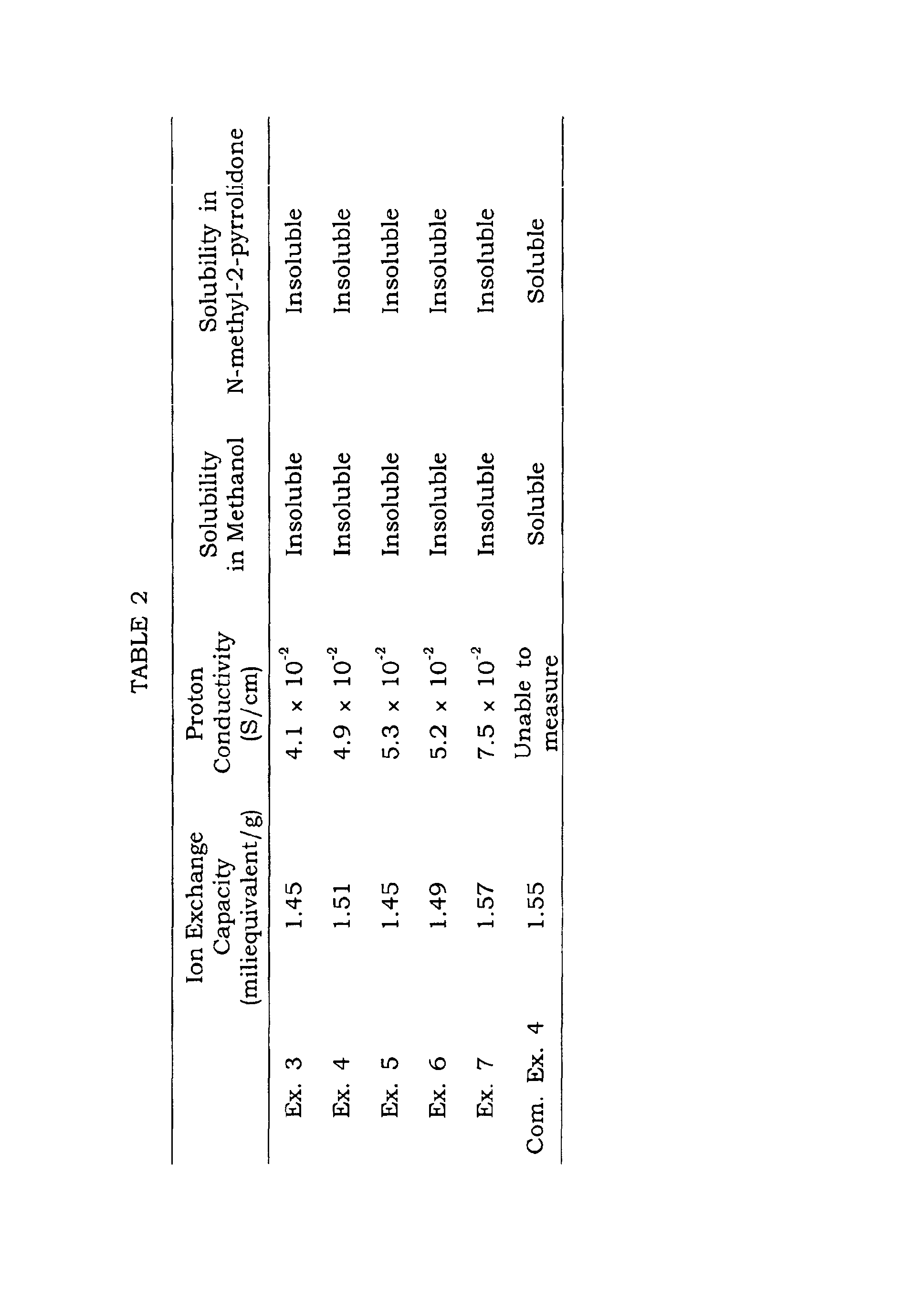

In comparison to Examples 3 to 7 in which the solubility in methanol at room temperature is less than 0.01 % by weight and the solubility in N-methyl-2-pyrrolidone at 5°C is less than 5 % by weight, the sulfonated polyphenylene sulfide of Comparative Example 4 has a solubility in methanol at room temperature of at least 0.01 % by weight and a solubility in N-methyl-2-pyrrolidone at 5°C of at least 5 % by weight. The above clearly indicates that the sulfonated polyphenylene sulfide of Comparative Example 4 cannot be used in a direct methanol fuel cell which directly uses methanol as fuel.

From comparing (Fig. 1 and Fig. 2) the infrared absorption spectrum of Example 3 and Comparative Example 4, compared to the sulfonated polyphenylene sulfide membrane of Example 3 in which the absorption peaks within the wave number range of 1000 to 1080 cm⁻¹ is only at 1010 cm⁻¹ and 1060 cm⁻¹, the membrane of Comparative Example 4 was found to also have absorption at 1035 cm⁻¹ and the structure of the two were found to be different.

Consequently, the sulfonated polymer membrane comprising the sulfonated polyphenylene sulfide membrane of the present invention of Examples 3 to 7 was found to be applicable in polymer electrolyte fuel cells using various types of fuel such as a direct methanol fuel cell and the effectiveness of the present invention was indicated.

From comparing the proton conductivity of Examples 3 to 7 (Table 2), the proton conductivity was found to improve by exposing electron beams and the effectiveness of the present invention was indicated.

### EXAMPLE 8

Polyphenylene sulfide (product name: DIC PPS FZ-2200-A5, available from Dainippon Ink And Chemicals, Incorporated, hereinafter PPS) was used as the polymer compound. Tricresyl phosphate (product name: TCP, Daihachi Chemical Industry Co., Ltd., hereinafter TCP) was used as the plasticizer.

Here, the above polymer compound comprising polyphenylene sulfide has a main component in which Ar₁ is formula (2) and x is 0 in the above formula (1).

5 parts by weight of TCP was added based on 100 parts by weight of PPS, which was then mixed. The mixture was melt kneaded with a twin screw extruder heated to 280°C and pellets of the mixture of PPS and TCP were obtained.

A specified amount of the pellets were placed between a pair of stainless steel plates and after leaving for 10 minutes at 300°C without applying pressure, heat press was conducted for 5 minutes at 300°C and 4.9 MPa. Furthermore, cool press was conducted for 5 minutes at room temperature and 4.9 MPa to obtain a polymer film of 60 µm in thickness.

The polymer film was contacted with the dichloromethane solution of chlorosulfonic acid (amount added of chlorosulfonic acid based on film is 214 %, concentration of chlorosulfonic acid is 0.5 % by weight) by immersing for 20 hours at room temperature and then rinsed with ion exchanged water until neutral. Then, the membrane was left in a constant temperature and humidity chamber adjusted to 23°C and a relative humidity of 98 %, 80 %, 60 % and 50 % respectively for 30 minutes and dried to obtain a proton-conductive polymer membrane.

The obtained proton-conductive polymer membrane maintained the membrane shape and regarding this membrane, the ion exchange capacity was 1.72 miliequivalent/g and the proton conductivity at room temperature was 9.3 × 10⁻² S/cm. The evaluation results are shown in Tables 3 and 4.

### EXAMPLE 9

The experiment was conducted in the same manner as in Example 8 except that the amount added of TCP was 10 parts by weight. The obtained proton-conductive polymer membrane maintained the membrane shape and regarding this membrane, the ion exchange capacity was 1.70 miliequivalent/ g and the proton conductivity at room temperature was 9.1 × 10⁻² S/cm. The evaluation results are shown in Tables 3 and 4.

### EXAMPLE 10

The experiment was conducted in the same manner as in Example 8 except that the amount added of TCP was 20 parts by weight.

The obtained proton-conductive polymer membrane maintained the membrane shape and regarding this membrane, the ion exchange capacity was 1.68 miliequivalent/g and the proton conductivity at room temperature was 8.5 × 10⁻² S/cm. The evaluation results are shown in Tables 3 and 4.

### EXAMPLE 11

The experiment was conducted in the same manner as in Example 8 except that the amount added of TCP was 30 parts by weight. The obtained proton-conductive polymer membrane maintained the membrane shape and regarding this membrane, the ion exchange capacity was 1.56 miliequivalent/g and the proton conductivity at room temperature was 7.8 × 10⁻² S/cm. The evaluation results are shown in Tables 3 and 4.

### EXAMPLE 12

The experiment was conducted in the same manner as in Example 8 except that the amount added of TCP was 50 parts by weight. The obtained proton-conductive polymer membrane maintained the membrane shape and regarding this membrane, the ion exchange capacity was 1.65 miliequivalent/g and the proton conductivity at room temperature was 8.2 × 10⁻² S/cm. The evaluation results are shown in Tables 3 and 4.

### EXAMPLE 13

The experiment was conducted in the same manner as in Example 8 except that TCP was not added.

The obtained proton-conductive polymer membrane maintained the membrane shape and regarding this membrane, the ion exchange capacity was 1.69 miliequivalent/g and the proton conductivity at room temperature was 7.7 × 10⁻² S/cm. The evaluation results are shown in Tables 3 and 4.

### COMPARATIVE EXAMPLE 5

The experiment was conducted in the same manner as in Example 8 except that Nafion 115 available from Dupont Co. was used as the proton-conductive polymer membrane.

Regarding this membrane, the ion exchange capacity was 0.94 miliequivalent/g and the proton conductivity at room temperature was 7.1 × 10⁻² S/cm. The evaluation results are shown in Table 3.

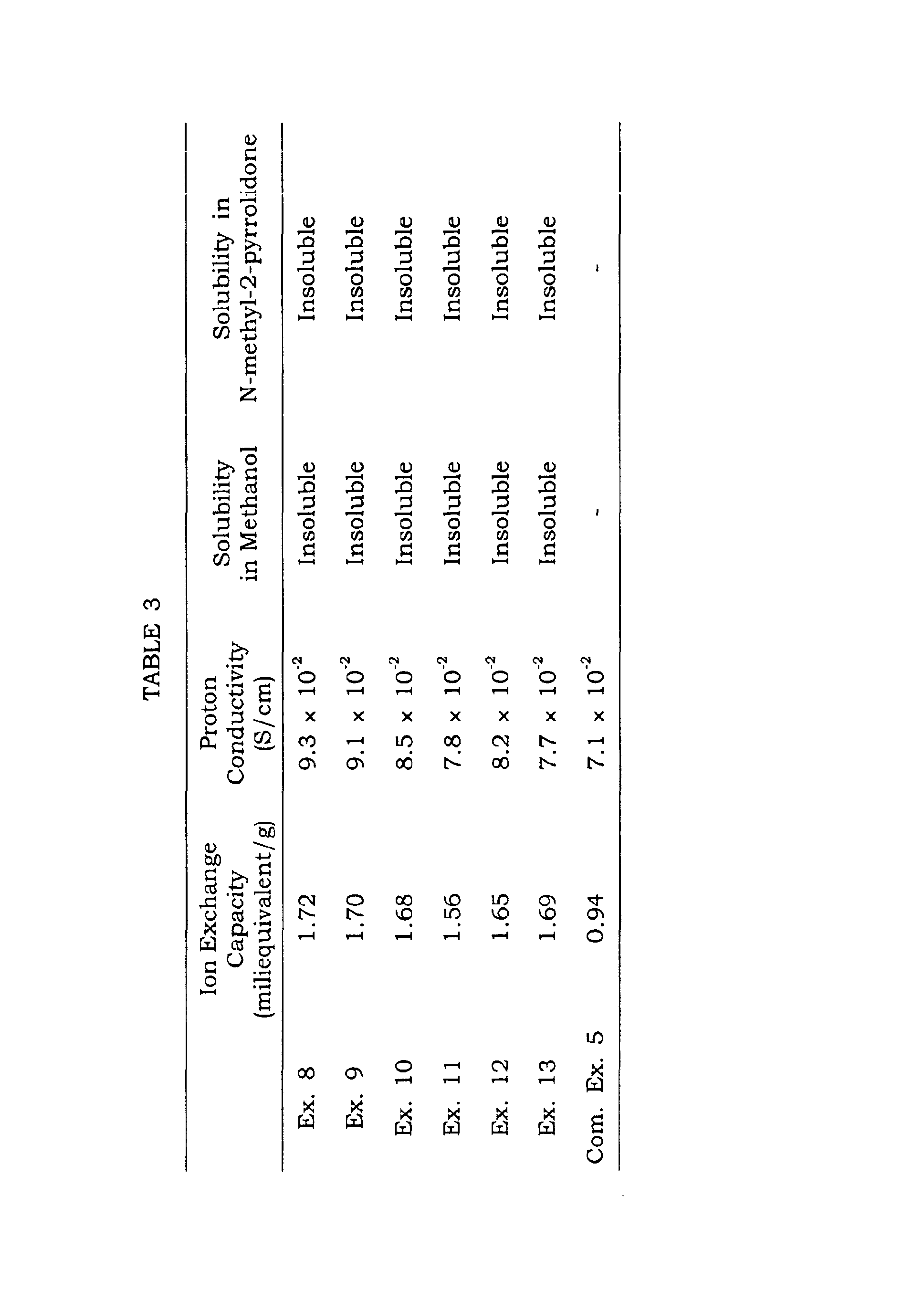

**TABLE 4**

| | Tensile Strength (MPa) | Elongation at Break (%) |
|---|---|---|
| Ex. 8 | 57 | 8.5 |
| Ex. 9 | 54 | 9.2 |
| Ex. 10 | 41 | 14 |
| Ex. 11 | 34 | 12 |
| Ex. 12 | 29 | 8.8 |
| Ex. 13 | 60 | 3.7 |

From comparing the proton conductivity of Examples 8 to 13 and Comparative Example 5 (Table 3), a decrease in proton conductivity was not found in the proton-conductive polymer membrane of the present invention by adding a plasticizer. Also, the proton-conductive polymer membrane of the present invention is equal to or higher in proton conductivity compared to the commercially available proton-conductive polymer membrane and was found to be effective as a membrane for a fuel cell.

From comparing the elongation of Examples 8 to 13 (Table 4), the proton-conductive polymer membrane of the present invention was improved in elongation at break by adding the plasticizer and the effectiveness of the proton-conductive polymer membrane of the present invention which contains a plasticizer was indicated.

### EXAMPLES 14 to 21

The polymer film comprising polyphenylene sulfide used in Example 1 was used.

945 g of dichloromethane and 4.72 g of chlorosulfonic acid were weighed and put in a 900 mL glass flask to prepare a chlorosulfonic acid solution. 2.21 g of the above polymer film was weighed, contacted with the chlorosulfonic acid solution by immersion and left at room temperature for the time specified in Table 5 (the amount of chlorosulfonic acid was 2 equivalents based on the aromatic unit of polyphenylene sulfide).

The proton-conductive polymer membrane was recovered and rinsed with ion exchanged water until neutral. Then, the obtained proton-conductive polymer membrane was left for 12 hours in ion exchanged water at room temperature. Then, the proton-conductive polymer membrane was recovered and left in a constant temperature and humidity chamber adjusted to 23°C and a relative humidity of 98 %, 80 %, 60 % and 50 % respectively for 30 minutes and dried to obtain the proton-conductive polymer membrane of the present invention which is sulfonated polyphenylene sulfide.

The relationship between membrane properties of the obtained sulfonated polyphenylene sulfide membrane and the immersion time are shown in Table 5.

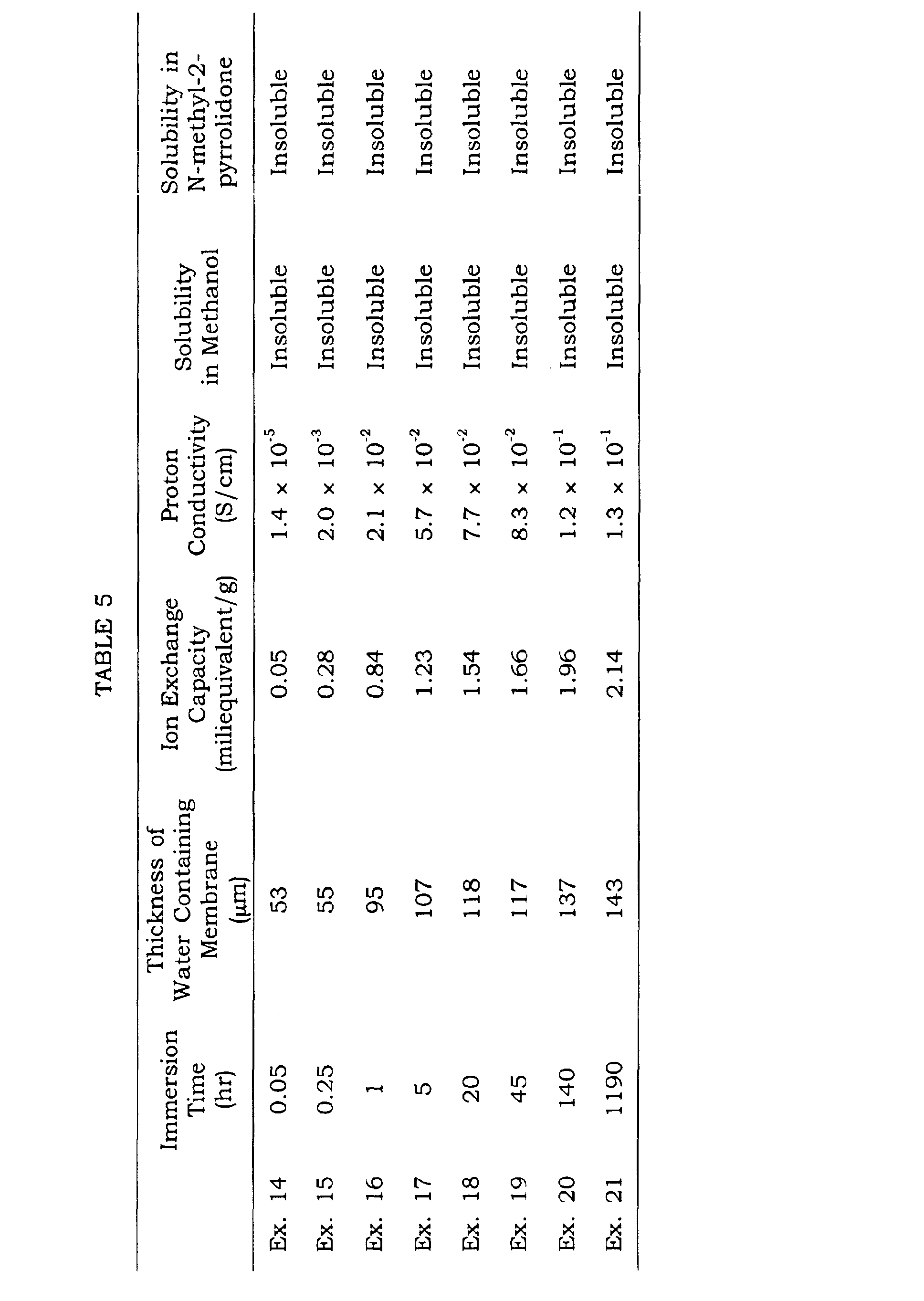

### EXAMPLES 22 to 29

Electron beams of an acceleration voltage of 4.6 MeV, exposure amount of 500 kGy and electric current of 20 mA were applied to the sulfonated polyphenylene sulfide membrane obtained in Examples 14 to 21 and the properties of the sulfonated polyphenylene sulfide membrane were evaluated. The relationship between membrane properties of the sulfonated polyphenylene sulfide membrane after exposing electron beams and the immersion time are shown in Table 6.

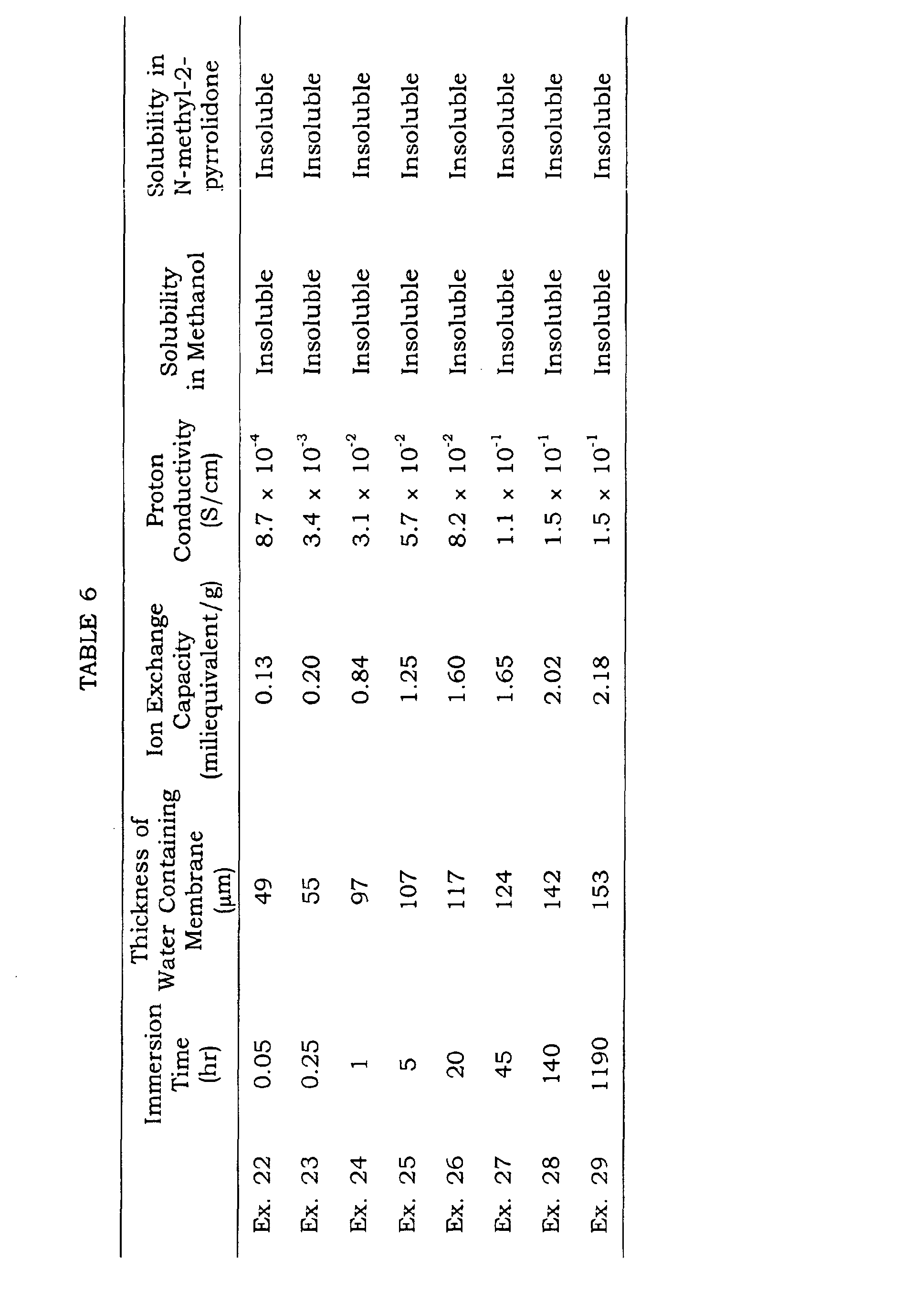

### EXAMPLES 30 to 32

Polyphenylene sulfide (product name: FZ-2200-A5, available from Dainippon Ink And Chemicals, Incorporated, hereinafter PPS) was used as the polymer compound. Tricresyl phosphate (product name: TCP, Daihachi Chemical Industries, hereinafter TCP) was used as the plasticizer.

Here, the above polymer compound comprising polyphenylene sulfide has a main component in which Ar₁ is formula (2) and x is 0 in the above formula (1).

A specified amount of TCP was added to 100 parts by weight of PPS, which was then mixed. The mixture was melt kneaded with an extruder of a screw temperature of 290°C and T-die temperature of 320°C and pellets of the mixture of PPS and TCP were obtained.

Pellets were obtained by adding 0 part by weight of TCP in Example 30, 2 parts by weight of TCP in Example 31 and 5 parts by weight of TCP in Example 32.

A polymer film of 50 µm in thickness was obtained from the pellets by melt extrusion.

The polymer film was contacted with the dichloromethane solution of chlorosulfonic acid (amount added of chlorosulfonic acid based on film is 214 %, concentration of chlorosulfonic acid is 0.4 % by weight) by immersing for 20 hours at room temperature (25°C) and then rinsed with ion exchanged water until neutral. Then, the membrane was left in a constant temperature and humidity vessel adjusted to 23°C and a relative humidity of 98 %, 80 %, 60 % and 50 % respectively for 30 minutes and dried to obtain a proton-conductive polymer membrane.

The evaluation results of the obtained proton-conductive polymer membrane are shown in Tables 7, 8 and 9.

**TABLE 7**

| | Thickness of Water Containing Membrane (µm) | Ion Exchange Capacity (miliequivalent/g) | Proton Conductivity (S / cm) |
|---|---|---|---|
| Ex. 30 | 107 | 1.45 | 4.1 × 10⁻² |
| Ex. 31 | 80 | 1.46 | 6.5 × 10⁻² |
| Ex. 32 | 80 | 1.60 | 8.0 × 10⁻² |

**TABLE 8**

| | | Strength at Break at (MPa) | Elongation Break (average value) (%) | Elongation at Break (maximum value) (%) |
|---|---|---|---|---|
| Ex. 30 | - | 51 | 9 | 12 |
| Ex. 31 | MD | 38 | 12 | 20 |
| | TD | 38 | 11 | 20 |

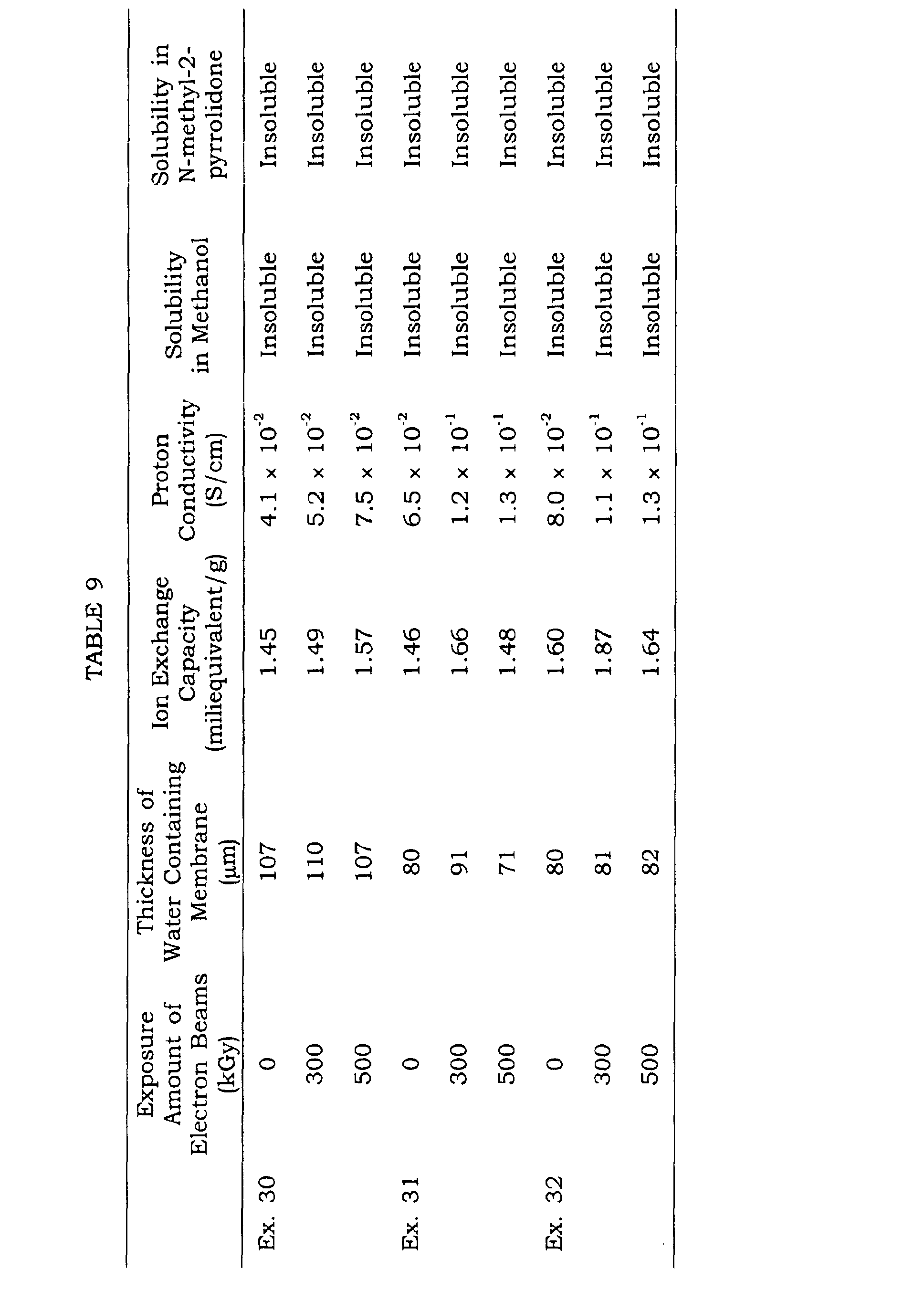

The proportion of sulfide and sulfoxide within the main chain was measured regarding the powder of the sulfonated polyphenylene sulfide obtained in Comparative Example 4.

Also, the proportion of sulfide and sulfoxide within the main chain was measured in the same way regarding the proton-conductive polymer membrane of the present invention obtained in Example 18. The evaluation results are respectively shown in Table 10.

**TABLE 10**

| | Sulfide (-S-) (Area %) | Sulfoxide (-SO-) (Area %) | Solubility in Methanol | Solubility in N-methyl-2-pyrrolidone |
|---|---|---|---|---|
| Ex. 18 | 98.4 | 1.6 | Insoluble | Insoluble |
| Com. Ex. 4 | 88.6 | 11.4 | Soluble | Soluble |

### INDUSTRIAL APPLICABILITY

According to the present invention, a proton-conductive polymer membrane comprising a polymer compound which has structural repeating units represented by formula (1) in which the aromatic units are partially substituted with proton-conductive substituents, (wherein Ar₁ represents a divalent aromatic unit and x represents an integer of 0 to 2), wherein the polymer compound has a solubility in methanol at room temperature of less than 0.01 % by weight or solubility in N-methyl-2-pyrrolidone at 5°C of less than 5 % by weight exhibits high proton conductivity and is useful, as various types of fuel can be selected when used in a polymer electrolyte fuel cell.

Furthermore, the proton-conductive polymer membrane of the present invention comprising a polymer compound which has structural repeating units represented by formula (1) in which the aromatic units are partially substituted with proton-conductive substituents and a plasticizer exhibits high proton conductivity. Also, the membrane is useful as a membrane for polymer electrolyte fuel cell, as breaking of the membrane which accompanies dimensional distortion in an environment in which the fuel cell operates is prevented as the membrane has favorable mechanical properties.

Further more, according to the present invention, a process is provided, by which a proton-conductive polymer membrane having excellent properties can be prepared in a practical and simple method compared to the conventional method by contacting a sulfonating agent with a polymer film having structural repeating units represented by formula (1) such as polyphenylene sulfide.

The proton-conductive polymer membrane such as a sulfonated polyphenylene sulfide membrane obtained by this process can be used as a membrane for a polymer electrolyte fuel cell.

## Claims

1. A proton-conductive polymer membrane comprising a polymer compound having structural repeating units represented by the following formula (1) in which aromatic units are partially substituted with proton-conductive substituents, 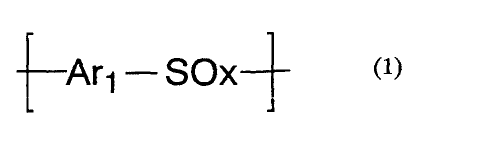 (wherein Ar₁ represents a divalent aromatic unit and x represents an integer of 0 to 2)
wherein said polymer compound has a solubility in methanol at room temperature of less than 0.01 % by weight or solubility in N-methyl-2-pyrrolidone at 5°C of less than 5 % by weight.

2. The proton-conductive polymer membrane of Claim 1, wherein said polymer compound further comprises a plasticizer.

3. The proton-conductive polymer membrane of Claim 2, wherein said plasticizer is a phosphate type compound.

4. The proton-conductive polymer membrane of 3, wherein said phosphate type compound is at least one member selected from the group consisting of triphenyl phosphate and tricresyl phosphate.

5. The proton-conductive polymer membrane of Claim 1, wherein Ar₁ is a divalent aromatic unit represented by any of formulas (2) to (11) in said formula (1).

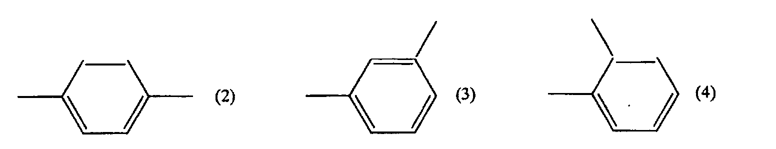

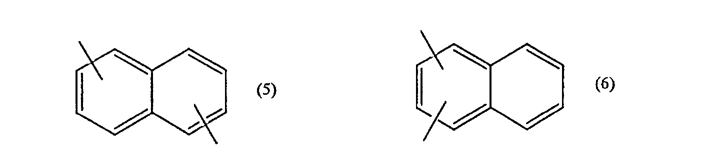

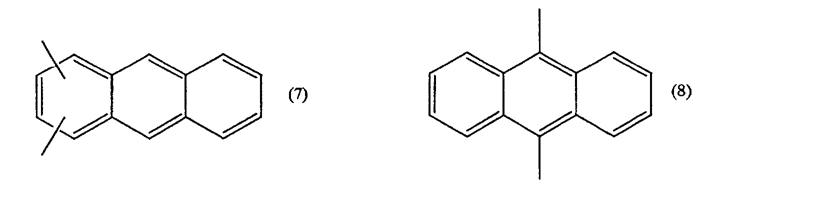

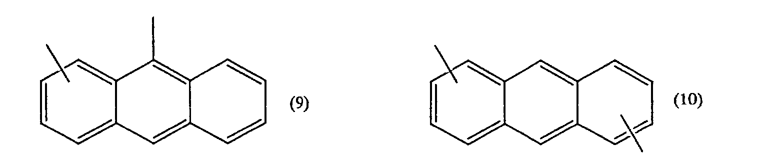

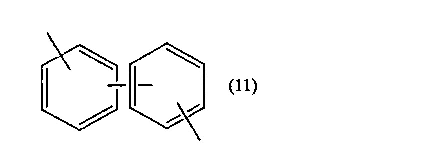

6. The proton-conductive polymer membrane of Claim 1, wherein Ar₁ is a divalent aromatic unit represented by any of formulas (2) to (4) and x is 0 in said formula (1).

7. The proton-conductive polymer membrane of Claim 1, wherein said proton-conductive substituent is a sulfonic acid group.

8. The proton-conductive polymer membrane of Claim 1, wherein the amount of sulfide units in said polymer compound which are oxidized into sulfoxide or sulfone is 0 to 10 % by mole based on the total amount of said repeating units.

9. The proton-conductive polymer membrane of Claim 1, to which at least one type of radiation selected from the group consisting of γ rays, electron beams and ion beams is applied.

10. The proton-conductive polymer membrane of Claim 1, to which radiation of 10 to 1000 kGy is applied.

11. The proton-conductive polymer membrane of Claim 1, which has an ion exchange capacity of 0.5 to 8 miliequivalent/g.

12. The proton-conductive polymer membrane of Claim 1, which has a proton conductivity at room temperature of at least 1.0 × 10⁻² S/cm.

13. The proton-conductive polymer membrane of Claim 1, wherein said proton-conductive polymer membrane has a thickness of 5 to 200 µm.

14. A membrane for a fuel cell comprising the proton-conductive polymer membrane of Claim 1.

15. A polymer electrolyte fuel cell using the proton-conductive polymer membrane of Claim 1.

16. A process for preparing a proton-conductive polymer membrane which comprises contacting a polymer film comprising a polymer compound having structural repeating units represented by formula (1) with a sulfonating agent. 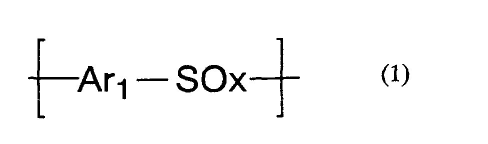 (wherein Ar₁ represents a divalent aromatic unit and x represents an integer of 0 to 2).

17. The process of Claim 16, wherein said sulfonating agent is at least one member selected from the group consisting of chlorosulfonic acid, sulfur trioxide-triethyl phosphate, concentrated sulfuric acid, fuming sulfuric acid and trimethylsilyl chlorosulfate.

18. The process of Claim 16, wherein the amount of said sulfonating agent is 0.5 to 10 equivalents based on said aromatic units of said polymer compound.

19. The process of Claim 16, wherein said sulfonating agent is contacted with said polymer membrane in the presence of a solvent.

20. The process of Claim 16, wherein the concentration of said sulfonating agent within a mixed solution comprising said sulfonating agent and said solvent is 0.1 to 10 % by weight.

21. The process of Claim 16, wherein said solvent is at least one member selected from the group consisting of 1,1,2,2-tetrachloroethane, 1,1,1,2-tetrachloroethane, 1,1,1-trichloroethane, 1,2-dichloroethane, trichloroethylene, tetrachloroethylene, dichloromethane and chloroform.
